# EUROPEAN PATENT APPLICATION

(11) **EP 4 596 500 A2**
(43) Date of publication of application: **06.08.2025**
(21) Application number: 25154303.9
(22) Date of filing: 28.01.2025
(51) Int. Cl.: C01G 53/504, H01M 4/525

(54) **CATHODE ACTIVE MATERIAL FOR LITHIUM SECONDARY BATTERY AND LITHIUM SECONDARY BATTERY INCLUDING THE SAME**

(30) Priority: 30.01.2024 KR 20240014171
(71) Applicant: SK On Co., Ltd., Seoul 03161 (KR)
(72) Inventor: PARK, Hye Jin, 34124 Daejeon (KR); NOH, Mi Jung, 34124 Daejeon (KR)
(74) Representative: Prüfer & Partner mbB Patentanwälte · Rechtsanwälte

(57) **Abstract**

A cathode active material for a lithium secondary battery according to embodiments of the present disclosure includes a lithium-transition metal oxide including a transition metal including nickel (Ni). A molar ratio of lithium to elements except for lithium and oxygen in the lithium-transition metal oxide is 1.04 to 1.08, and a molar fraction of cobalt (Co) in the transition metal is 0.05 or less. A lithium secondary battery including the cathode active material for a lithium secondary battery and having improved structural stability and charge/discharge efficiency is provided.

## Description

### [BACKGROUND OF THE INVENTION]

### 1. Field of the Invention

The disclosure of the present application relates to a cathode active material for a lithium secondary battery and a lithium secondary battery including the same, and more specifically, to a cathode active material for a lithium secondary battery which contains a transition metal and an additional element and a lithium secondary battery including the cathode active material.

### 2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, etc., as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

For example, an NCM-based active material containing nickel, cobalt and manganese is used as a cathode active material for a lithium secondary battery. In addition, as a field, to which the lithium secondary battery is applied, is expanded to large devices such as the electric vehicle, a high nickel (high-Ni)-based lithium oxide having an increased nickel content as a cathode active material to secure a high capacity of the lithium secondary battery is being developed. However, as the content of nickel in the cathode active material is increased, stability of a chemical structure and a crystal structure of active material particles may be decreased.

For example, a cation mixing phenomenon in which nickel cations are transferred to lithium sites may occur, such that the stability and lifespan characteristics during repeated charging/discharging operations of the lithium secondary battery may be decreased.

In addition, as a content of nickel is increased, contents of cobalt and manganese included in the cathode active material may be relatively reduced. Therefore, it is necessary to design a cathode active material composition that can provide sufficient conductivity, energy density and stability while securing economic advantages in production of the cathode active material.

### [SUMMARY OF THE INVENTION]

An object of the present disclosure is to provide a cathode active material for a lithium secondary battery having improved stability and charge/discharge characteristics.

Another object of the present disclosure is to provide a lithium secondary battery including the cathode active material.

To achieve the above objects, in one or more embodimentsof the present disclosure, there is provided a cathode active material for a lithium secondary battery including: a lithium-transition metal oxide which comprises a transition metal including nickel (Ni), wherein a molar ratio of lithium to elements except for lithium and oxygen in the lithium-transition metal oxide is 1.04 to 1.08, and a molar fraction of cobalt (Co) in the transition metal is 0.05 or less.

In some embodiments, the molar ratio of lithium in the lithium-transition metal oxide may be 1.04 to 1.07.

In some embodiments, the molar fraction of cobalt (Co) in the transition metal may be 0.03 or less.

In some embodiments, the lithium-transition metal oxide may include no cobalt (Co).

In some embodiments, the transition metal may further include manganese (Mn).

In some embodiments, a molar fraction of nickel in the transition metal may be 0.6 or more.

In some embodiments, the molar fraction of nickel in the transition metal may be 0.7 to 0.9.

In some embodiments, the lithium-transition metal oxide may further include an auxiliary element which is different from the transition metal and may have an oxidation number of +3.

In some embodiments, the auxiliary element may include at least one of B, Al, Y, Fe and Cr.

In some embodiments, the auxiliary element may include at least one of B, Al, Y and Fe.

In some embodiments, a total content based on a weight of the auxiliary element in the lithium-transition metal oxide may be 500 ppm to 5,000 ppm.

In some embodiments, the total content based on a weight of the auxiliary element in the lithium-transition metal oxide may be 800 ppm to 3,000 ppm.

In some embodiments, the auxiliary element may include Al.

In some embodiments, the auxiliary element may further include Y.

In one or more embodiments of the present disclosure, there is provided a lithium secondary battery including: a cathode which includes the cathode active material for a lithium secondary battery of the above-described embodiments; and an anode disposed to face the cathode.

In accordance with the cathode active material for a lithium secondary battery in one or more embodiments of the present disclosure, the molar ratio of lithium may be adjusted in a predetermined range exceeding 1, thereby reducing the content of cobalt. Accordingly, crystal instability due to cation mixing in the cathode active material may be suppressed, and charge/discharge stability may be improved.

According to preferred exemplary embodiments, the type and content of the doping or coating element included in the cathode active material may be adjusted, thereby further improving structural stability and charge/discharge efficiency of the cathode active material.

The lithium secondary battery according to preferred exemplary embodiments may be widely applied to green technology fields including an electric vehicle, a battery charging station, as well as solar power generation and wind power generation, etc. using the batteries. For example, the lithium secondary battery may be used in an eco-friendly electric vehicle, and a hybrid vehicle, etc., thus to suppress air pollution and greenhouse gas emissions, and prevent climate change.

### [BRIEF DESCRIPTION OF THE DRAWINGS]

The above and other objects, features and other advantages of the present disclosure will be more clearly understood from the following detailed description taken in conjunction with the accompanying drawings, in which:
FIGS. 1 and 2 are a schematic plan view and a cross-sectional view of a lithium secondary battery according to preferred exemplary embodiments, respectively;
FIG. 3 is a graph illustrating cation mixing ratios measured according to lithium molar ratios of lithium-transition metal oxides of examples and comparative examples; and
FIG. 4 is a graph illustrating charge/discharge efficiency (initial C.E.) measured according to the lithium molar ratios of lithium-transition metal oxides of the examples and comparative examples.

### [DETAILED DESCRIPTION OF THE INVENTION]

The embodiments of the present disclosure provide a cathode active material for a lithium secondary battery which contains nickel, and has an auxiliary element. In addition, a lithium secondary battery which includes the cathode active material and has improved capacity, efficiency and stability is provided.

Hereinafter, embodiments of the present disclosure will be described in more detail. However, the drawings and embodiments attached to the present specification serve to further understand the technical idea of the present disclosure, therefore the concept of the present invention should not be interpreted as being limited to such contents illustrated and described in the drawings and embodiments.

### <Cathode active material for lithium secondary battery>

In exemplary embodiments, the cathode active material for a lithium secondary battery (hereinafter, may be abbreviated as a 'cathode active material') may include a lithium-transition metal oxide. The cathode active material may include a plurality of lithium-transition metal oxide particles.

For example, a content of the lithium-transition metal oxide particles in a total weight of the cathode active material may be 50% by weight ("wt%") or more, and preferably 70 wt% or more, 80 wt% or more, 90 wt% or more, or 95 wt% or more.

In one or more embodiments, the cathode active material may further include other nickel-cobalt-manganese (NCM)-based active material, a lithium iron phosphate-based active material, etc., in addition to the lithium-transition metal oxide particles to be described below.

In one or more embodiments, the cathode active material may be substantially composed of the lithium-transition metal oxide particles.

The lithium-transition metal oxide includes nickel (Ni), and may further include at least one of cobalt (Co) and manganese (Mn). In one or more embodiments, the lithium-transition metal oxide may further include manganese (Mn). In one ore more embodiments, the lithium-transition metal oxide may further include cobalt (Co) and manganese (Mn).

Mn and/or Co may be provided as a main active element of the cathode active material together with Ni.

According to some embodiments of the present disclosure, a molar fraction of nickel among elements except for lithium and oxygen included in the lithium-transition metal oxide may be 0.6 or more. For example, a molar ratio of nickel based on the total moles of nickel, cobalt and manganese included in the lithium-transition metal oxide may be 0.6 or more.

According to some embodiments, the molar fraction of nickel among the elements except for lithium and oxygen included in the lithium-transition metal oxide may be 0.7 or more. For example, the molar ratio of nickel based on the total moles of nickel, cobalt and manganese included in the lithium-transition metal oxide may be 0.7 or more.

In some embodiments, the molar fraction of nickel may be 0.6 to 0.9, or 0.7 to 0.9. In one or more embodiments, the molar fraction of nickel may be 0.6 to 0.85, 0.6 to 0.8, 0.7 to 0.85, 0.7 to 0.8, or 0.7 or more and less than 0.8. In one one more embodiments, the molar fraction of nickel may be 0.7 to 0.77, or 0.7 to 0.76.

Ni may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

In one or more embodiments, the lithium-transition metal oxide may have a cobalt-less or cobalt-free composition, in which the content of cobalt is reduced. By decreasing the content of cobalt which requires relatively high costs, manufacturing costs of the cathode active material may be reduced. In addition, while the content of manganese is relatively increased, structural and crystal stability of the cathode active material may be enhanced.

As described above, as the content of Ni is increased, the long-term storage stability and lifespan stability of the cathode or the secondary battery may be relatively decreased, and side reactions with an electrolyte may also be increased. However, in one or more embodiments, by increasing the content of Mn while decreasing the content of Co, lifespan stability and capacity retention characteristics may be improved.

In some embodiments, a molar fraction of cobalt in the lithium-transition metal oxide may be 0.05 or less. For example, the molar ratio of cobalt based on the total moles of nickel, cobalt and manganese included in the lithium-transition metal oxide may be 0.05 or less.

In one or more embodiments, the molar fraction of cobalt in the lithium-transition metal oxide may be 0.04 or less, 0.03 or less, or 0.02 or less. In one or more embodiments, the content of cobalt in the lithium-transition metal oxide may be substantially 0 (zero).

In one or more embodiments of the present disclosure, a molar fraction of lithium in the lithium-transition metal oxide may be 1.04 or more. For example, the molar fraction of lithium to elements except for lithium and oxygen in the lithium-transition metal oxide may be 1.04 or more.

Accordingly, the lithium-transition metal oxide may have a lithium (Li)-excess or over-lithiated composition, in which the content of lithium is relatively increased.

In some embodiments, the molar fraction of lithium in the lithium-transition metal oxide may be 1.08 or less. In one or more embodiments, the molar fraction of lithium in the lithium-transition metal oxide may be 1.04 to 1.08.

If the molar fraction of lithium is less than 1.04 or greater than 1.08, a ratio of cation defects in the lithium-transition metal oxide may be increased. In addition, the charge/discharge efficiency of the lithium secondary battery may also be reduced.

In one or more embodiments, the molar fraction of lithium in the lithium-transition metal oxide may be 1.04 to 1.07. Within the lithium molar fraction range, cation defects in the lithium-transition metal oxide may be more effectively suppressed/reduced.

For example, the molar fraction of lithium in the lithium-transition metal oxide may be 1.04 to 1.065, 1.045 to 1.065, or 1.045 to 1.062.

The lithium-transition metal oxide may include a layered structure or a crystal structure represented by Formula 1 below.

[Formula 1] Liₓ(NiₐM_{b})O_{2+z}

In Formula 1, x, a, b and z may be in a range of 1.04≤x≤1.08, 0.6≤a≤0.9, 0.1≤b≤03, -0.5≤z≤0.1, respectively. As described above, M may include Mn and/or Co.

In Formula 1, the numerical ranges of x, a and b may be adjusted as described above.

The chemical structure represented by Formula 1 indicates a bonding relationship between elements included in the layered structure or crystal structure of the cathode active material, and does not exclude other additional elements. For example, M includes Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one more embodiments, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

In one or more embodiments, the auxiliary element may include an element that may have an oxidation number of +3.

In some embodiments, the auxiliary element may include at least one of B, Al, Y, Fe and Cr. In some embodiments, the auxiliary element may include at least one of B, Al, Y and Fe.

The auxiliary element may be provided as an element that maintains or supplements the structural stability of the cathode active material which may be deteriorated by the reduced content of Co. For example, the auxiliary element may fill a site where Co element can be positioned, thereby suppressing the movement and mixing of the transition metal ions.

For example, the cathode active material or the lithium-transition metal oxide may include a layered structure or a crystal structure represented by Formula 1-1 below.

[Formula 1-1] Liₓ(NiₐM1_{b1}M2_{b2})O_{2+z}

In Formula 1-1, M1 may include Mn and/or Co. M2 may include the above-described auxiliary elements. In Formula 1-1, x, a, b1, b2 and z may be in a range of 1.04≤x≤1.08, 0.6≤a≤0.9, 0.1≤b1+b2≤0.3, -0.5≤z≤0.1, respectively.

In Formula 1-1, the numerical ranges of x, a, b1 and b2 may be adjusted as described above.

The auxiliary element may be provided as a coating element or a doping element included in the lithium-transition metal oxide. The coating element or the doping element may be present on the surface of the lithium-transition metal oxide particles, or may penetrate through the surface of the lithium-transition metal oxide particles to be included in the bonding structure represented by Formula 1 or 1-1 above.

In one or more embodiments, a total content based on a weight of the auxiliary element in the lithium-transition metal oxide may be 500 ppm to 5,000 ppm. In some embodiments, the total content based on a weight of the auxiliary element may be 600 ppm to 4,000 ppm, or 800 ppm to 4,000 ppm.

In one or more embodiments, the total content based on a weight of the auxiliary element may be 800 ppm to 3,000 ppm, 900 ppm to 3,500 ppm, 900 ppm to 3,000 ppm, 1,000 ppm to 3,000 ppm, or 1,400 ppm to 3,000 ppm.

According to the above-described embodiments of the present disclosure, by introducing Co-less and Li-excess compositions together, cost efficiency and crystal/structural stability of the cathode active material may be improved together.

As described above, by adjusting the molar fraction of Li, destabilization of the crystal structure due to a decrease in the content of Co may be reduced or inhibited. Accordingly, cation disorder in which the transition metal ion is positioned/substituted at the lithium site may be suppressed.

In addition, by adding the above-described auxiliary element within a predetermined content range, crystal/structural stability of the cathode active material may be further enhanced. In addition, the auxiliary element may suppress or reduce side reactions and defects on the surface of the lithium-transition metal oxide. Therefore, the initial charge/discharge efficiency of the lithium secondary battery may be enhanced, as well as the energy density may be improved.

In some embodiments, the auxiliary element may include Al. In one or more embodiments, the auxiliary element may include Al and Y together. In this case, a metal element having a +3 valence may be included to suppress the instability due to the decreased content of Co and more effectively act as a barrier for cation movement.

In addition, Al and/or Y may be included in the above-described content range to effectively suppress the cation defect ratio while maintaining or improving the charge/discharge efficiency.

In some embodiments, the content of each of Al and Y may be adjusted in a range of 500 ppm to 2,000 ppm. In one or more embodiments, the content of each of Al and Y may be 600 ppm to 1,500 ppm, or 700 ppm to 1,400 ppm.

In some embodiments, the auxiliary element may include Al and Fe together. In this case, a metal element having a +3 valence may be included to relatively compensate for the decrease in conductivity due to the reduced content of Co, thereby increasing the charge/discharge efficiency.

In some embodiments, a content of each of Al and Fe may be adjusted in a range of 100 ppm to 2,000 ppm. In one or more embodiments, the content of Al may be 300 ppm to 1,500 ppm, or 400 ppm to 1,400 ppm. In one or more embodiments, the content of Fe may be 100 ppm to 1,000 ppm, or 100 ppm to 500 ppm.

In some embodiments, the auxiliary element may further include B. In this case, the surface of the lithium-transition metal oxide particles may be additionally protected. A content of B may be less than 1,000 ppm. For example, the content of B may be 200 ppm to 950 ppm, 200 ppm to 500 ppm, or 300 ppm to 500 ppm.

Formulas 1 and 1-1 do not exclude the introduction of additional doping element and coating element. For example, the auxiliary element may include a first auxiliary element having the above-described oxidation number of +3 and a second auxiliary element different from the first auxiliary element. For example, the second auxiliary element may include Na, Mg, Ca, Ti, Hf, V, Nb, Ta, Mo, W, Cu, Ag, Zn, Ga, C, Si, Sn, Sr, Ba, Ra, P, Zr and the like.

Hereinafter, a method for preparing a cathode active material according to the above-described embodiments of the present invention will be provided.

In one or more embodiments, active metal sources may be prepared. The active metal sources include a nickel source, and may further include a manganese source and/or a cobalt source.

Examples of the nickel source may include nickel sulfate (NiSO₄), nickel hydroxide (Ni(OH)₂), nickel nitrate (Ni(NO₃)₂), nickel acetate (Ni(CH₃CO₂)₂), and a hydrate thereof. Examples of the manganese source may include manganese sulfate (MnSO₄), manganese hydroxide (Mn(OH)₂), manganese nitrate (Mn(NO₃)₂), manganese acetate (Mn(CH₃CO₂)₂), and a hydrate thereof. Examples of the cobalt source may include cobalt sulfate (CoSO₄), cobalt hydroxide (Co(OH)₂), cobalt nitrate (Co(NO₃)₂), cobalt carbonate (CoCO₃), and a hydrate thereof.

In one or more embodiments, nickel sulfate, manganese sulfate and cobalt sulfate may be used as the nickel source, manganese source and cobalt source, respectively.

In one or more embodiments, the above-described active metal sources may be mixed and reacted, for example, through a co-precipitation method, to obtain an active material precursor. For example, the active material precursor may be prepared in the form of nickel-manganese hydroxide or nickel-manganese-cobalt hydroxide.

A precipitant and/or a chelating agent may be used to promote the co-precipitation reaction. The precipitant may include an alkaline compound such as sodium hydroxide (NaOH), sodium carbonate (Na₂CO₃), etc. The chelating agent may include, for example, ammonia water, ammonium carbonate, etc.

The above-described active material precursor may be mixed with the above-described auxiliary element source and lithium source, and reacted through heat treatment to prepare lithium-transition metal oxide particles. For example, the heat treatment temperature may be about 600°C to 850°C.

The lithium source may include, for example, lithium carbonate (Li₂CO₃), lithium nitrate (LiNO₃), lithium acetate (CH₃COOLi), lithium oxide (Li₂O), lithium hydroxide (LiOH), etc. These may be used alone or in combination of two or more thereof. In one or more embodiments, lithium hydroxide may be used as the lithium source.

The auxiliary element source may include a compound including at least one of B, Al, Y, Fe and Cr. For example, an oxide or hydroxide of at least one of B, Al, Y, Fe and Cr may be used as the auxiliary element source. Boric acid may also be used as the boron source.

According to some embodiments, impurities such as LiOH and Li₂CO₃ may remain on the surface of the lithium-transition metal oxide particles. The impurities may be removed by washing with an aqueous or organic solvent.

### <Lithium secondary battery>

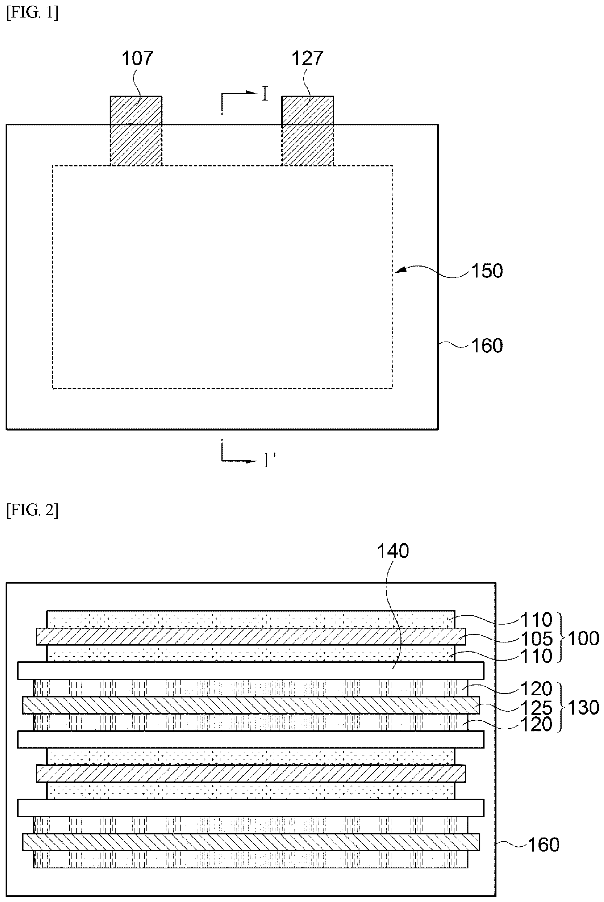

FIGS. 1 and 2 are a schematic plan view and a cross-sectional view illustrating a lithium secondary battery in one or more embodiments, respectively. For example, FIG. 2 is a cross-sectional view taken on line I-I' of FIG. 1 in a thickness direction of the battery.

Referring to FIGS. 1 and 2, the lithium secondary battery may include an electrode assembly including a cathode 100, an anode 130 and a separation membrane 140 interposed between the cathode and the anode. The electrode assembly may be housed in a case 160 together with an electrolyte to be impregnated.

The cathode 100 may include a cathode active material layer 110 formed by applying the above-described cathode active material to a cathode current collector 105.

For example, the cathode current collector 105 may include stainless steel, nickel, aluminum, titanium, or an alloy thereof. The cathode current collector may also include aluminum or stainless steel subjected to surface treatment with carbon, nickel, titanium, or silver. For example, the cathode current collector 105 may have a thickness of 10 µm to 50 µm.

For example, the cathode active material may be mixed in a solvent to prepare a cathode slurry. The cathode current collector 105 may be coated with the cathode slurry, and then dried and pressed to prepare the cathode active material layer 110. The coating process may include gravure coating, slot die coating, simultaneous multilayer die coating, imprinting, doctor blade coating, dip coating, bar coating or casting, etc. The cathode slurry may further include a binder and a conductive material.

Non-limiting examples of a solvent used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR), polyacrylic acid-based binder, poly(3,4-ethylenedioxythiophene, PEDOT)-based binder and the like. In one or more embodiments, a PVDF-based binder may be used as the cathode binder.

The conductive material may be added to enhance the conductivity and/or the mobility of lithium ions or electrons. For example, non-limiting examples of the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as LaSrCoO₃, and LaSrMnO₃.

The anode 130 includes an anode current collector 125, and an anode active material, and may include an anode active material layer 120 formed on the anode current collector 125.

The anode 130 may include the anode current collector 125, and the anode active material layer 120 formed by applying an anode active material to at least one surface of the anode current collector 125.

Non-limiting examples of the anode current collector 125 may include a copper foil, a nickel foil, a stainless steel foil, a titanium foil, a nickel foam, a copper foam, a polymer substrate coated with a conductive metal and the like. The anode current collector 125 may have a thickness of 10 µm to 50 µm, for example.

As the anode active material, any material known in the related art, so long as it can intercalate and deintercalate lithium ions, may be used without particular limitation thereof. For example, carbon-based materials such as crystalline carbon, amorphous carbon, carbon composites, carbon fibers, etc., a lithium alloy, a lithium metal, a silicon-containing material, or a tin-containing material may be used.

Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like

The lithium metal may include pure lithium metal or lithium metal having a protective layer formed thereon for suppressing dendrite growth, etc. In one or more embodiments, a lithium metal-containing layer deposited or coated on the anode current collector may be used as the anode active material layer. In one or more embodiments, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx (0<x<2), a metal-doped SiOx (0<x<2), a silicon-carbon composite, etc. The metal may include lithium and/or magnesium, and the metal-doped SiOx(0<x<2) may include a metal silicate.

In some embodiments, an anode slurry may be prepared by mixing and stirring the anode active material with a binder, a conductive material and/or a dispersant in a solvent. The anode slurry may be applied to at least one surface of the anode current collector, and then dried and pressed to prepare the anode 130.

As the binder and conductive material, materials substantially the same as or similar to the binder and conductive material included in the cathode may be used. In some embodiments, as the anode binder, a styrene-butadiene rubber (SBR)-based binder, carboxymethyl cellulose (CMC), polyacrylic acid-based binder, poly(3,4-ethylenedioxythiophene, PEDOT)-based binder, and the like may be used.

The separation membrane 140 may include a porous polymer film or a porous nonwoven fabric. The porous polymer film may include a polyolefin polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers and the like. The separation membrane (140) may also include a ceramic-based material. For example, inorganic particles may be applied to the polymer film, or dispersed within the polymer film to improve heat resistance.

In one or more embodiments, an electrode cell is defined by the cathode 100, the anode 130, and the separation membrane 140, and a plurality of electrode cells may be stacked to form, for example, an electrode assembly 150. The electrode assembly 150 may be of a winding type, a stacking type, a z-folding type, or a stack-folding type electrode assembly.

The electrode assembly 150 may be housed within a case 160 together with an electrolyte to define a lithium secondary battery. In one or more embodiments, a non-aqueous electrolyte may be used as the electrolyte.

The non-aqueous electrolyte includes a lithium salt of an electrolyte and an organic solvent, the lithium salt is represented by, for example, Li⁺X⁻, and as an anion (X⁻) of the lithium salt, F⁻, Cl⁻, Br, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 150 and the anode 100 instead of the above-described separation membrane 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one or more embodiments, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 1, electrode tabs (a cathode tabs and an anode tabs) may protrude from each cathode current collector 105 and each anode current collector 125, respectively, which belong to each electrode cell, and may extend to one end portion of the case 160. The electrode tabs may be fused together with the one end portion of the case 160 to be connected with electrode leads (a cathode lead 107 and an anode lead 127) extending or exposed to an outside of the case 160.

In FIG. 1, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical shape using a can, a square shape, a pouch shape or a coin shape.

Hereinafter, preferable examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

### Examples and Comparative Examples

### Preparation of cathode active material (lithium-transition metal oxide)

NiSO₄, CoSO₄ and MnSO₄ were mixed using distilled water from which internal dissolved oxygen is removed by bubbling with N₂ for 24 hours so as to be the composition (in molar ratio) of Ni, Co and Mn shown in Table 1. The solution was introduced into a reactor at 60°C, and a co-precipitation reaction was performed for 72 hours using NaOH and NH₃·H₂O as a precipitant and a chelating agent, respectively, to prepare an active material precursor in the form of a hydroxide. The obtained precursor was dried at 100°C for 12 hours, and then again dried at 120°C for 12 hours.

Lithium hydroxide and auxiliary element sources (oxides of B, Al, Y and Fe) were introduced into a dry high-speed mixer together with the active material precursor so as to satisfy the molar fraction of Li and auxiliary element content shown in Table 1, and then uniformly mixed for 10 minutes.

The mixture was put into a calcination furnace and heated to 730°C to 780°C at a rate of 2°C/min, then maintained at 730°C to 780°C for 12 hours. Oxygen was passed continuously at a flow rate of 10 mL/min during heating and maintenance. After completion of the calcination, the mixture was naturally cooled to room temperature, followed by pulverization and classification to obtain a lithium-transition metal oxide.

The molar ratio of transition metals (Ni, Co, and Mn) included in the lithium-transition metal oxides according to the examples and comparative examples, the molar ratio of lithium to the elements except for lithium and oxygen (Li/Me), and the contents (ppm) of the auxiliary elements are as shown in Table 1 below.

**[TABLE 1]**

| | Ni:Co:Mn (molar ratio) | Li/Me | Auxiliary element content (ppm) | | | | |
|---|---|---|---|---|---|---|---|
| | | | B | Al | Y | Fe | Total |
| Exampe 1 | 76:01:23 | 1.061 | 0 | 1410 | 0 | 0 | 1410 |
| Exampe 2 | 76:02:22 | 1.046 | 0 | 990 | 770 | 0 | 1760 |
| Exampe 3 | 75:00:25 | 1.056 | 490 | 1100 | 1330 | 0 | 2920 |
| Exampe 4 | 73:02:25 | 1.076 | 0 | 980 | 0 | 0 | 980 |
| Exampe 5 | 77:00:23 | 1.079 | 0 | 1000 | 1360 | 0 | 2360 |
| Exampe 6 | 76:01:23 | 1.059 | 0 | 1240 | 0 | 380 | 1620 |
| Exampe 7 | 75:00:25 | 1.048 | 340 | 1890 | 2100 | 0 | 4330 |
| Exampe 8 | 74:02:24 | 1.046 | 0 | 480 | 0 | 110 | 590 |
| Comparative Exampe 1 | 77:01:22 | 1.027 | 930 | 220 | 270 | 0 | 1420 |
| Comparative Exampe 2 | 76:02:22 | 1.032 | 0 | 980 | 0 | 0 | 980 |
| Comparative Exampe 3 | 75:00:25 | 1.034 | 680 | 0 | 0 | 0 | 680 |
| Comparative Exampe 4 | 76:01:23 | 1.003 | 0 | 1750 | 0 | 430 | 2180 |
| Comparative Exampe 5 | 76:01:23 | 0.996 | 0 | 1310 | 0 | 910 | 2220 |
| Comparative Exampe 6 | 75:00:25 | 1.085 | 0 | 650 | 0 | 160 | 810 |
| Comparative Exampe 7 | 76:01:23 | 1.114 | 230 | 710 | 0 | 0 | 940 |

### Manufacturing of secondary battery

The cathode active material prepared as described above, Denka Black as a conductive material and PVDF as a binder were mixed in a mass ratio composition of 97:2:1, respectively, to prepare a cathode slurry. The prepared cathode slurry was applied to an aluminum current collector, followed by drying and pressing the same to prepare a cathode.

An anode slurry, which includes 93 wt% of natural graphite as an anode active material, 5 wt% of KS6 as a flake type conductive material, 1 wt% of styrene-butadiene rubber (SBR) as a binder, and 1 wt% of carboxymethyl cellulose (CMC) as a thickener, was prepared. The anode slurry was applied to a copper substrate, followed by drying and pressing the same to prepare an anode.

The cathode and the anode prepared as described above were respectively notched in a predetermined size and stacked, then an electrode cell was fabricated by interposing a separator (polyethylene, thickness: 12 µm) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more, to manufacture a lithium secondary battery. Thereafter, formation charging-discharging was performed on the lithium secondary battery (charge conditions: CC-CV, 0.25C, 4.2 V, 0.05C, CUT-OFF; discharge conditions: CC, 0.25C, 2.5 V, CUT-OFF).

The electrolyte used herein was prepared by dissolving 1M LiPF₆ solution in a mixed solvent of EC/EMC/EMC (20/80; volume ratio).

### Experimental Example

### (1) Measurement of cation mixing ratio

Cation mixing values of the lithium-transition metal oxide particles of the examples and comparative examples were measured through XRD analysis and Rietveld refinement. Specifically, XRD was performed according to the conditions in Table 2 below, and the Rietveld refinement was performed using the High score plus program and the pseudo-Voigt function model.

**[TABLE 2]**

| XRD (X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan range | 10-120° |
| Scan step size | 0.0065° |
| Divergence slit | 1/4° |
| Antiscatter slit | 1° |

### (2) Evaluation of charge/discharge efficiency

The lithium secondary batteries manufactured according to the examples and comparative examples were charged (CC-CV 0.1C 4.3 V 0.005C CUT-OFF) in a chamber at 25°C and then battery capacities (initial charge capacities) were measured, and again discharged (CC 0.1C 3.0 V CUT-OFF) and the battery capacities (initial discharge capacities) were measured.

Charge/discharge efficiency were calculated by dividing the measured initial discharge capacity by the measured initial charge capacity, then converting it into a percentage (%).

Evaluation results are shown in Table 3 below.

**[TABLE 3]**

| | Cation mixing (%) | Charge/discharge characteristics | | |
|---|---|---|---|---|
| | | Charging capacity (mAh/g) | Discharge capacity (mAh/g) | Efficiency (%) |
| Exampe 1 | 3.75 | 208.8 | 186.9 | 89.5% |
| Exampe 2 | 3.74 | 210.7 | 191.7 | 91.0% |
| Exampe 3 | 3.87 | 211.0 | 187.4 | 88.8% |
| Exampe 4 | 4.69 | 210.1 | 182.6 | 86.9% |
| Exampe 5 | 4.86 | 205.5 | 177.3 | 86.3% |
| Exampe 6 | 3.97 | 207.4 | 187.8 | 90.5% |
| Exampe 7 | 4.55 | 210.3 | 185.2 | 88.1% |
| Exampe 8 | 4.31 | 209.6 | 184.5 | 88.0% |
| Comparative Exampe 1 | 5.76 | 204.1 | 176.5 | 86.5% |
| Comparative Exampe 2 | 5.00 | 194.0 | 164.0 | 84.5% |
| Comparative Exampe 3 | 5.34 | 205.7 | 179.5 | 87.3% |
| Comparative Exampe 4 | 8.58 | 194.8 | 158.5 | 81.4% |
| Comparative Exampe 5 | 8.31 | 199.9 | 165.1 | 82.6% |
| Comparative Exampe 6 | 5.13 | 206.6 | 175.8 | 85.1% |
| Comparative Exampe 7 | 5.94 | 203.3 | 173.2 | 85.2% |

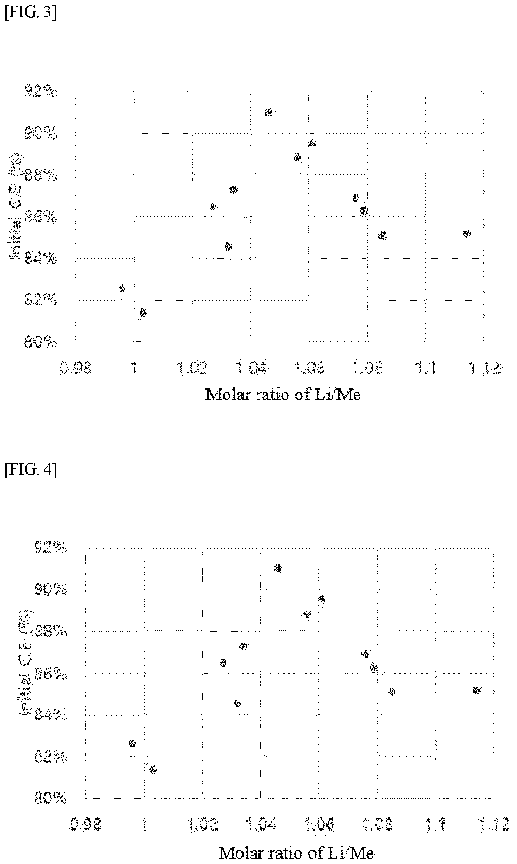

FIG. 3 is a graph illustrating cation mixing ratios measured according to lithium molar ratios of lithium-transition metal oxides of examples and comparative examples. FIG. 4 is a graph illustrating charge/discharge efficiency (initial C.E.(Coulombic Efficiency)) measured according to the lithium molar ratios of lithium-transition metal oxides of the examples and comparative examples.

Specifically, FIGS. 3 and 4 show the measurement results for lithium-transition metal oxides of Examples 1-5 and Comparative Examples.

Referring to Table 3, FIGS. 3 and 4, in the lithium-transition metal oxide particles having a Co-less or Co-free composition, a low cation mixing ratio and increased charge/discharge efficiency were secured in a lithium molar ratio range of 1.04 to 1.08. In addition, when the lithium molar ratio was adjusted in a range of 1.04 to 1.07, the cation mixing ratio was further reduced, and the charge/discharge efficiency was further increased.

Referring to Examples 1 and 6 having the same composition of Ni, Co and Mn, the charge/discharge efficiency was further increased in Example 6 using Al and Fe together.

Referring to Examples 1 and 2 having similar compositions of Ni, Co and Mn, the charge/discharge efficiency was further increased in Example 2 using Al and Y together.

### [Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

## Claims

1. A cathode active material for a lithium secondary battery comprising:
a lithium-transition metal oxide which comprises a transition metal including nickel (Ni),
wherein a molar ratio of lithium to elements except for lithium and oxygen in the lithium-transition metal oxide is 1.04 to 1.08, and a molar fraction of cobalt (Co) in the transition metal is 0.05 or less.

2. The cathode active material for a lithium secondary battery according to claim 1, wherein the molar ratio of lithium in the lithium-transition metal oxide is 1.04 to 1.07.

3. The cathode active material for a lithium secondary battery according to claims 1 or 2, wherein the molar fraction of cobalt (Co) in the transition metal is 0.03 or less.

4. The cathode active material for a lithium secondary battery according to one of claims 1 to 3, wherein the lithium-transition metal oxide includes no cobalt (Co).

5. The cathode active material for a lithium secondary battery according to one of claims 1 to 4, wherein the transition metal further comprises manganese (Mn).

6. The cathode active material for a lithium secondary battery according to claim 5, wherein a molar fraction of nickel in the transition metal is 0.6 or more.

7. The cathode active material for a lithium secondary battery according to claim 5, wherein the molar fraction of nickel in the transition metal is 0.7 to 0.9.

8. The cathode active material for a lithium secondary battery according to one of claims 1 to 7, wherein the lithium-transition metal oxide further comprises an auxiliary element which is different from the transition metal and has an oxidation number of +3.

9. The cathode active material for a lithium secondary battery according to claim 8, wherein the auxiliary element comprises at least one of B, Al, Y, Fe and Cr.

10. The cathode active material for a lithium secondary battery according to claim 8, wherein the auxiliary element comprises at least one of B, Al, Y and Fe.

11. The cathode active material for a lithium secondary battery according to claim 8, wherein a total content based on a weight of the auxiliary element in the lithium-transition metal oxide is 500 ppm to 5,000 ppm.

12. The cathode active material for a lithium secondary battery according to claim 8, wherein the total content based on a weight of the auxiliary element in the lithium-transition metal oxide is 800 ppm to 3,000 ppm.

13. The cathode active material for a lithium secondary battery according to claim 8, wherein the auxiliary element comprises Al.

14. The cathode active material for a lithium secondary battery according to claim 13, wherein the auxiliary element further comprises Y.

15. A lithium secondary battery comprising:
a cathode which comprises the cathode active material for a lithium secondary battery of one of claims 1 to 14; and
an anode disposed to face the cathode.
